# EUROPEAN PATENT SPECIFICATION

(11) **EP 4 160 634 B1**
(45) Date of publication and mention of the grant of the patent: **05.02.2025**
(21) Application number: 21814176.0
(22) Date of filing: 18.05.2021
(51) Int. Cl.: H01G 11/52, H01M 50/409, H01M 50/417, H01M 50/434, H01M 50/443, H01M 50/449, H01M 10/052, H01M 10/0525, H01M 50/403, H01M 50/414, H01M 50/431, H01M 50/446, H01M 50/451, H01M 50/457, H01M 50/489, H01M 50/491, H01M 50/494, H01G 9/02

(54) **SEPARATOR FOR POWER STORAGE DEVICE**
SEPARATOR FÜR ENERGIESPEICHERVORRICHTUNG
SÉPARATEUR POUR DISPOSITIF DE STOCKAGE D'ÉNERGIE

(30) Priority: 28.05.2020 JP 2020093528
(43) Date of publication of application: 05.04.2023
(73) Proprietor: Asahi Kasei Kabushiki Kaisha, Tokyo 1000006 (JP)
(72) Inventor: UCHIDA, Kazunori, Tokyo 100-0006 (JP); MORI, Shohei, Tokyo 100-0006 (JP); SUZUKI, Toshihiro, Tokyo 100-0006 (JP); MURAKAMI, Masato, Tokyo 100-0006 (JP); SAITO, Mitsuko, Tokyo 100-0006 (JP); HAMASAKI, Shinya, Tokyo 100-0006 (JP); SHIMOYAMADA, Michiko, Tokyo 100-0006 (JP)
(74) Representative: Strehl Schübel-Hopf & Partner
(86) International application number: PCT/JP2021/018845
(87) International publication number: WO 2021/241335

(56) References cited:
- EP-A1- 2 408 043
- WO-A1-2017/073781
- WO-A1-2017/126510
- CN-A- 108 539 096
- CN-A- 109 860 473
- JP-A- 2014 093 128
- JP-A- 2016 128 532
- JP-A- 2017 010 933
- JP-A- 2018 195 564
- US-A1- 2013 302 696
- US-A1- 2018 294 455

## Description

### FIELD

The present disclosure relates to a separator for an electricity storage device.

### BACKGROUND

Microporous membranes, particularly polyolefin-based microporous membranes, are used in many technical fields such as microfiltration membranes, cell separators, capacitor separators, and fuel cell materials, and are particularly used as separators for secondary cells typified by lithium-ion cells. In addition to applications in compact electronic devices such as mobile phones and notebook computers, lithium-ion cells are being researched for use in various applications such as electric vehicles, including hybrid vehicles and plug-in hybrid vehicles.

In recent years, lithium-ion cells having high energy capacity, high energy density, and high output characteristics have been in demand, along with an increasing demand for separators further having high strength (for example, high puncture strength), high permeability (low air permeability), and high heat resistance.

CN 108 539 096 A discloses a separator for an electricity storage device including an inorganic-containing layer comprising inorganic particles and a polyolefin resin, wherein the separator has a TD heat shrinkage rate a at 150 °C of 4% or less. PTL 1 discloses a microporous polyolefin film manufactured from a mixture of a polyolefin having a viscosity average molecular weight of 600,000 or greater and an inorganic filler (claim 11 and Examples). However, the microporous polyolefin film fails to bring about a separator that combines high strength, high permeability, and high heat resistance. That is because, among the three physical properties, heat resistance is deemed particularly insufficient.

### [CITATION LIST]

### [PATENT LITERATURE]

[PTL 1] WO 2019/107119

### [NON-PATENT LITERATURE]

[NPL 1] P.S. Liao, T.S. Chen, and P.C. Chung, "A Fast Algorithm for Multilevel Thresholding", Journal of Information Science and Engineering, Vol. 17, 2001, pp. 713-727
[NPL 2] Michael Doube, Michal M Klosowski, Ignacio Arganda-Carreras, Fabrice P Cordelieres, Robert P Dougherty, Jonathan S Jackson, Benjamin Schmid, John R Hutchinson, and Sandra J Shefelbine, "BoneJ: Free and extensible bone image analysis in ImageJ", Bone, Volume 47, Issue 6, December 2010, pp. 1076-1079

### SUMMARY

### [TECHNICAL PROBLEM]

An object of the invention of the present application is to provide a separator for an electricity storage device capable of simultaneously achieving both requirements for electricity storage device applications: high permeability and cell safety at high temperatures.

### [SOLUTION TO PROBLEM]

A separator for an electricity storage device according to the invention is defined by the features of claim 1.

### [ADVANTAGEOUS EFFECTS OF INVENTION]

According to the present disclosure, a separator for an electricity storage device having both high permeability and cell safety at high temperatures can be provided.

### BRIEF DESCRIPTION OF DRAWINGS

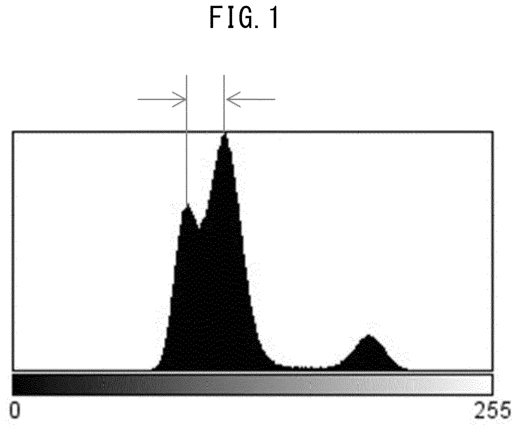

FIG. 1 is an example of a brightness histogram (horizontal axis: brightness, vertical axis: frequency) of an image processing region.

### <<Separator for electricity storage device>>

It is generally known that a microporous membrane having high strength can be provided by using a polyolefin having a high molecular weight as the polyolefin constituting the microporous membrane. However, when a polyolefin having a high molecular weight is used, since the viscosity during melting is high, it is difficult to form a thin membrane. As a method used to form a polyolefin having a high molecular weight into a thin membrane, a wet method of dissolving the polyolefin in a solvent to provide a microporous membrane is known. Since a wet method uses a solvent, inorganic particles are easily dispersed, and a microporous membrane containing a high ratio of inorganic particles with respect to the polyolefin can be easily provided. However, since a microporous membrane using a wet method undergoes an extraction step and a biaxial stretching step, the amount of heat shrinkage tends to increase, and achieving high dimensional accuracy in the TD is difficult. Further, a high stretching ratio is necessary to impart continuity to pores obtained by phase separation, leading to a high pore ratio. As a result, the ratio of inorganic particles is relatively low, making it difficult to achieve high heat resistance.

Filler porosification method is known as a method of providing a microporous membrane without dissolving a polyolefin in a solvent. Since inorganic particles are used as porosification starting points in a filler porosification method, the volume of pores increases as the content of inorganic particles increases. Consequently, as the ratio of inorganic particles in the microporous membrane is relatively reduced, achieving high heat resistance is difficult. Further, in a filler porosification method, since starting points of filler porosification are easily formed as closed pores, biaxial stretching is necessary to form communicating pores from the viewpoint of obtaining high permeability. As a microporous membrane is stretched biaxially, the volume of pores increases and the ratio of inorganic particles in the microporous membrane is relatively reduced, making it difficult to achieve high heat resistance.

Therefore, it has been difficult to achieve high heat resistance in the prior art due to an increase in the volume of pores, regardless of whether a dry or wet method is used.

Lamella porosification method is known as another method of providing a microporous membrane without dissolving a polyolefin in a solvent. To increase the content of inorganic particles in a lamella porosification method, it is necessary to increase the resin temperature since, unlike a wet method, there is no solvent component. However, when the resin temperature is increased, forming a membrane under the condition of high orientation necessary for the formation of lamellar crystals becomes difficult. Thus, lamellar crystals are not sufficiently formed and porosification tends to be poor, leading to failure in obtaining a membrane having high permeability. Therefore, even in lamella porosification methods of the prior art, increasing the content of inorganic particles while maintaining high permeability has not been possible, and achieving high heat resistance has been difficult.

The separator for an electricity storage device of the present disclosure is a separator for an electricity storage device including an inorganic-containing layer comprising inorganic particles and a polyolefin resin, wherein in a cross-section of the inorganic-containing layer, the area ratio of the inorganic particles is 9% or greater and 35% or less, and the area ratio of pores is 20% or greater and 60% or less. In addition, the heat shrinkage rate in the TD (TD heat shrinkage rate) of the separator for an electricity storage device is 4% or less. According to these features, high permeability and cell safety at high temperatures, both requirements for electricity storage device applications, can be simultaneously achieved. Examples of cell safety at high temperatures include maintenance of separator area, formation of an insulating film, and short-circuit suppression at high temperatures. Hereinafter, each feature will be described in detail.

### <Inorganic-containing layer>

The separator for an electricity storage device of the present disclosure is a separator for an electricity storage device including an inorganic-containing layer comprising inorganic particles and a polyolefin. In the present disclosure, the inorganic-containing layer is a microporous membrane which includes a plurality of pores and constitutes the separator for an electricity storage device. The inorganic-containing layer may be used as a single layer, or may be laminated in two or more layers and used as a multilayer.

### <Polyolefin>

The polyolefin is a polymer comprising a monomer having a carbon-carbon double bond as a repeating unit. Examples of the monomer constituting the polyolefin include, but are not limited to, monomers having 1 to 10 carbon atoms having a carbon-carbon double bond, such as ethylene, propylene, 1-butene, 4-methyl-1-pentene, 1-hexene, and 1-octene. The polyolefin may be a homopolymer, a copolymer, or a multistage polymer, and is preferably a homopolymer.

The polyolefin, specifically from the viewpoint of shutdown characteristics, is preferably polyethylene, polypropylene, or a copolymer or a mixture thereof.

The density of the polyolefin may preferably be 0.85 g/cm³ or more, for example, 0.88 g/cm³ or more, 0.89 g/cm³ or more, or 0.90 g/cm³ or more. The density of the polyolefin may preferably be 1.1 g/cm³ or less, for example, 1.0 g/cm³ or less, 0.98 g/cm³ or less, 0.97 g/cm³ or less, 0.96 g/cm³ or less, 0.95 g/cm³ or less, 0.94 g/cm³ or less, 0.93 g/cm³ or less, or 0.92 g/cm³ or less. The density of a polyolefin is associated with the crystallinity thereof. When the density of the polyolefin is 0.85 g/cm³ or more, productivity of the microporous membrane is improved, which is particularly advantageous in dry methods.

### <Inorganic particles>

The separator of the present disclosure is characterized in comprising inorganic particles (may also be referred to as "inorganic filler") in addition to the polyolefin. By including inorganic particles, a separator having high heat resistance can be obtained. The inorganic particles are combined with the polyolefin resin at the specific content and pore ratios of the present disclosure, whereby it is possible to obtain a polyolefin resin having high permeability (high pore ratio) and high heat resistance in addition to high strength.

Examples of the inorganic particles include oxide-based ceramics such as alumina, silica, titania, zirconia, magnesia, ceria, yttria, zinc oxide, and iron oxide; nitride-based ceramics such as silicon nitride, titanium nitride, and boron nitride; ceramics such as silicon carbide, calcium carbonate, magnesium sulfate, aluminum sulfate, barium sulfate, aluminum hydroxide, aluminum oxide hydroxide, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomite, and quartz sand; and glass fibers. From the viewpoint of safety in a cell and heat resistance, at least one selected from the group consisting of barium sulfate, titania, alumina, and boehmite is preferable.

The particle size of the inorganic particles is preferably 60 nm or more and 2000 nm or less, more preferably 100 nm or more and 1000 nm or less, and even more preferably 200 nm or more and 800 nm or less. Without limiting to theory, the reason that a high effect is obtained when the particle size of the inorganic particles is 60 nm or more and 2000 nm or less is speculated as follows. Specifically, when the particle size of the inorganic particles is 60 nm or more, the inorganic particles do not easily migrate into voids between electrodes during high-temperature melting of the separator, and remain between the positive electrode and the negative electrode, whereby the inorganic particles become a resistance component and the resistance between electrodes can be maintained. Therefore, the safety of a cell tends to be improved. Further, at a size of 60 nm or more, the inorganic particles are more easily dispersed within the inorganic-containing layer, and a portion having a significantly low concentration of inorganic particles does not easily occur in the separator. Consequently, a local shortage of resistance component can be prevented during high-temperature melting of the separator, and the resistance between electrodes can be maintained. When the inorganic particles are 2000 nm or less in size, stress concentration with respect to the thickness of the inorganic-containing layer does not easily occur, and the strength of the separator does not easily decrease. Further, when the inorganic particles are 2000 nm or less in size, variation in the thickness of the separator does not easily occur, and a decrease in quality can be minimized.

In the present disclosure, the content ratio of inorganic particles in the inorganic-containing layer is measured as a ratio of the area occupied by the inorganic particles in a cross-section of the inorganic-containing layer (hereinafter, also simply referred to as "area ratio of inorganic particles"). The area ratio of inorganic particles is 9% or greater, more preferably 12% or greater, and even more preferably 22% or greater. Without limiting to theory, by setting the area ratio of inorganic particles to 9% or greater, the inorganic particles remain as an inorganic particle layer that acts as a resistance component between electrodes during high-temperature melting of the separator, and the resistance between electrodes can be maintained, whereby the safety of a cell can be improved. Further, when the inorganic particles are contained in a specific amount or more, melted resin does not easily migrate into voids between electrodes and, together with the inorganic particles, remain as a resistance component between the electrodes. Thus, the resistance between electrodes can be maintained, and the safety of a cell is improved. The upper limit of the area ratio of the inorganic particles is not particularly limited, but from the viewpoint of high strength and lower risk of membrane rupture, may be, for example, 50% or less, 40% or less, 35% or less, or 30% or less. The content ratio of the inorganic particles is more preferably 24% or greater. The cross-section of the inorganic-containing layer, as described later in the Examples section, can be observed with a scanning electron microscope (SEM).

### <Surface treatment of inorganic particles>

It is preferable that inorganic particles surface-treated with a surface treatment agent be used to increase the dispersibility thereof in the polyolefin resin. Examples of the surface treatment agent include saturated fatty acids and/or salts thereof (saturated fatty acid salts), unsaturated fatty acids and/or salts thereof (unsaturated fatty acid salts), aluminum-based coupling agents, polysiloxane, and silane coupling agents. From the viewpoint of dispersibility in the polyolefin resin, the surface treatment agent is preferably a saturated fatty acid or a salt thereof or an unsaturated fatty acid or a salt thereof, and more preferably a saturated fatty acid having 8 or more carbon atoms or a salt thereof or an unsaturated fatty acid having 8 or more carbon atoms or a salt thereof. The surface treatment agent may be applied before kneading of the polyolefin, or may be added after kneading. From the viewpoint of uniformly covering the inorganic filler surface with the surface treatment agent, application before kneading is preferable. By applying the surface treatment agent, the inorganic filler is highly dispersed in the resin, and a higher heat resistance can be achieved.

The surface application amount on the inorganic filler is preferably 0.1 wt% or greater and 10 wt% or less based on the total weight of the surface-treated inorganic filler, though depending on the particle size of the inorganic filler. When the surface application amount is 10 wt% or less, excess surface treatment agent can be decreased. When the surface application amount is 0.1 wt% or greater, satisfactory dispersibility can be obtained.

### <Basis weight of inorganic particles>

The basis weight of the inorganic particles is preferably 0.15 mg/cm² or more. When the basis weight is 0.15 mg/cm² or more, the inorganic particles together with the resin do not easily migrate into voids between electrodes during high-temperature melting of the separator, and the inorganic particles remain as the inorganic-containing layer acting as a resistance component between the electrodes. Thus, a dense inorganic particle layer tends to be formed. The inorganic particles become a resistance component, resistance between electrodes can be maintained, and the safety of a cell tends to be improved.

### <Melt flow rate (MFR)>

The melt flow rate (MFR) of a polyolefin resin contained in the inorganic-containing layer (MFR of a single layer) when measured at a load of 2.16 kg and a temperature of 230 °C is preferably 0.2 or greater and 15 or less. Without limiting to theory, the reason therefor is presumably that when a polyolefin resin having a high MFR and the inorganic filler are kneaded, uniform kneading can occur, and the inorganic filler is dispersed to form a uniform separator, resulting in an increased effect of suppressing resistance between electrodes. On the other hand, when MFR is too low, the inorganic particles cannot be dispersed, portions having a significantly low concentration of inorganic filler within the separator are formed, and during high-temperature melting of the separator, local shortage of resistance component occurs, and it is not likely that resistance between electrodes can be maintained. Further, from the viewpoint of film formation stability during extrusion, when MFR is 0.2 or greater, film formation is facilitated without an extreme increase in pressure during extrusion. When MFR is 15 or less, the melted membrane tends to be more self-supporting, and winding and film formation are facilitated. In addition, when MFR is 15 or less, a decrease in degree of orientation can be minimized, lamella porosification is facilitated, and permeability can also be increased.

### <Pore>

In the present disclosure, the average pore size of the inorganic-containing layer is preferably 10 nm or more and 2000 nm or less, more preferably 10 nm or more and 1500 nm or less, and even more preferably 10 nm or more and 1000 nm or less. Without limiting to theory, the reason therefor is that when the average pore size of the inorganic-containing layer is 10 nm or more, a structure in which pores are connected to each other tends to be formed, and high permeability can be obtained. Further, when the average pore size is 2000 nm or less, it is considered that stress concentration with respect to the thickness of the inorganic-containing layer does not easily occur, and the strength of the separator does not easily decrease. The average pore size of the inorganic-containing layer, as described later in the Examples section, can be measured by observing a cross-section of the inorganic-containing layer with SEM.

The long pore diameters of the inorganic-containing layer are preferably aligned in one direction. As used herein, a "long pore diameter" refers to the longest line segment connecting any two points on a contour of a pore. Without limiting to theory, the long pore diameters are preferably aligned in one direction, since the separator is highly oriented and the strength in the direction of the long pore diameters is increased, facilitating winding operation of a cell. The alignment of the long pore diameters, as described later in the Examples section, can be confirmed by observing a cross-section of the inorganic-containing layer with SEM. The expression "aligned in one direction" means that in an electron microscope image of a separator surface, 90% or greater of fibrils are included within an angle range of ±20 degrees of the extending direction thereof. Specifically, in the above electron microscope image, when the long axes of 90% or greater of the fibrils are included within an angle range of ±20 degrees of each other, the alignment of the long pore diameters is determined to be "aligned in one direction".

In the present disclosure, the area ratio of pores in a cross-section of the inorganic-containing layer is 20% or greater and 60% or less. By setting the area ratio of the pores to 60% or less, ratios of the resin and the inorganic particles can be increased, and a network structure of solid contents is formed, thereby improving elongation at the time of puncture and facilitating a high puncture strength. If an attempt is made to increase pore ratio by increasing stretching ratio in the MD, the pores easily collapse in the thickness direction, connecting structures between pores are segmented, and air permeability tends to deteriorate. When the area ratio of the pores is 20% or greater, connecting structures between pores are easily formed due to decreases in ratios of the resin and the inorganic particles, and thus high permeability can be obtained.

### <Elastomer>

In the present disclosure, the inorganic-containing layer may further contain an elastomer in addition to a polyolefin resin and the inorganic particles. The inorganic-containing layer includes polypropylene as the polyolefin resin, and may further contain an elastomer in addition to the polyolefin resin and the inorganic particles. By including an elastomer in the inorganic-containing layer, melt tension can be decreased without impairing the balance of strength and permeability. Thus, even a low-MFR polyolefin having a high melt tension can be made into a thin membrane, and a separator having a high thin-membrane strength can be obtained.

### <Multilayer structure>

The separator for an electricity storage device may have a single layer of an inorganic-containing layer comprising the resin and the inorganic particles described above or a multilayer structure laminated with an additional microporous membrane. Specifically, the separator for an electricity storage device may be a two-layer structure in which one side of the inorganic-containing layer is laminated to a substrate or a three-layer structure in which both sides of a substrate are laminated with an inorganic-containing layer, or may have a multilayer structure having three layers or more.

A multilayer structure means a structure of two or more layers comprising the inorganic-containing layer of the present disclosure, preferably a multilayer structure in which three or more layers of microporous membranes are laminated. For the additional microporous membrane, a microporous layer composed of a polypropylene resin as a main component is preferable, and it is more preferable to further include a microporous outer layer composed of a polypropylene resin as a main component on one or both sides of the inorganic-containing layer.

The multilayer structure can exhibit the effect of the present invention regardless of the order of lamination. However, a three-layer structure laminated in the order of PP microporous layer/inorganic-containing layer/PP microporous layer is particularly preferable. By having a three-layer structure of PP microporous layer/inorganic-containing layer/PP microporous layer, heat resistance is provided by the inorganic-containing layer while mechanical strength and oxidation resistance when in contact with an electrode surface can be maintained by the PP microporous layers.

### <Thickness>

The thickness of the inorganic-containing layer is preferably 1 µm or more and 30 µm or less, and more preferably 1 µm or more and 27 µm or less. When the thickness is 1 µm or more, heat resistance of the separator for an electricity storage device is improved. When the thickness is 30 µm or less, energy density of the electricity storage device can be increased. The ratio of the thickness of the inorganic-containing layer to the overall thickness of the separator, considering the heat resistance, ion permeability, and physical strength of the separator, is preferably 15% or greater and 90% or less, more preferably 20% or greater and 80% or less, and even more preferably 20% or greater and 60% or less.

The thickness of the separator for an electricity storage device is preferably 5 µm or more and 30 µm or less, and more preferably 5 µm or more and 27 µm or less. When the thickness is 5 µm or more, heat resistance of the separator for an electricity storage device is improved. When the thickness is 30 µm or less, energy density of the electricity storage device can be increased.

### <Air permeability>

The upper limit value of air permeability (also called "air permeability resistance") of the separator for an electricity storage device, when the thickness of the separator is set in terms of 14 µm, may preferably be 2000 s/100 ml·14 µm or less, for example, 1000 s/100 ml·14 µm or less or 700 s/100 ml·14 µm or less. The lower limit value of air permeability of the separator for an electricity storage device, when the thickness of the separator is set in terms of 14 µm, may be but is not limited to, for example, 200 s/100 ml·14 µm or more, 210 s/100 ml·14 µm or more, or 220 s/100 ml·14 µm or more.

### <Puncture strength>

The lower limit value of puncture strength of the separator for an electricity storage device, when the thickness of the separator is set in terms of 14 µm, may preferably be 100 gf/14 µm or more, for example, 130 gf/14 µm or more or 160 gf/14 µm or more. The upper limit value of puncture strength of the multilayer structure, when the overall thickness of the multilayer structure is set in terms of 14 µm, may preferably be but is not limited to 550 gf/14 µm or less, for example, 500 gf/14 µm or less or 480 gf/14 µm or less.

### <MD/TD strength ratio>

The ratio of tensile strength in the MD to tensile strength in the TD of the separator for an electricity storage device (also referred to as "MD/TD strength ratio") is 6.0 or greater, and even more preferably 8.0 or greater. When the MD/TD strength ratio is 1.5 or greater, strength in the MD is increased due to strong orientation of the separator, facilitating cell winding operation. When the MD/TD strength is 1.5 or greater, heat shrinkage rate in the TD can be decreased, and thus resistance against short-circuiting due to heat shrinkage in the TD during cell winding is increased. The upper limit of the MD/TD strength ratio is not particularly limited, but is preferably 30 or less, more preferably 20 or less, and even more preferably 15 or less. When the MD/TD strength ratio is 30 or less, cracks do not easily form in the MD, and the problem of the separator tearing vertically (in the MD) does not easily occur.

### <TD heat shrinkage rate>

The heat shrinkage rate in the TD (TD heat shrinkage rate) at 150 °C of the separator for an electricity storage device is 4% or less, preferably 3% or less, more preferably 2% or less, and even more preferably 1% or less. When the heat shrinkage rate in the TD is 4% or less, an insulating film which maintains the separator area can be formed. Since insulation between electrodes can be maintained, resistance against short-circuiting due to heat shrinkage in the TD is increased in a laminated cell short-circuit test. The lower limit of the heat shrinkage rate is not particularly limited, but is -4% or greater, preferably -3% or greater, more preferably -2% or greater, and even more preferably -1% or greater. When the heat shrinkage rate in the TD is -4% or greater, wrinkles do not easily form when cell temperature rises, and the problem of the separator tearing does not easily occur when stress is evenly applied thereto. The reason for heat shrinkage in the TD taking on a negative value is that components contained inside the separator may expand due to heating.

### <Ratio of TD heat shrinkage rate with respect to area ratio of inorganic particles>

When TD heat shrinkage of the separator for an electricity storage device is designated as a and area ratio of inorganic particles is designated as b, the ratio (a/b) of TD heat shrinkage with respect to the area ratio of inorganic particles is preferably -10% or greater and 10% or less. When a/b is 10% or less, short-circuits can be suppressed even at high temperatures at which a resin flows. The reason for a/b taking on a negative value is because the TD heat shrinkage a takes on a negative value. The a/b is preferably 0% or greater and 10% or less. When the TD heat shrinkage rate a with respect to the area ratio b of the inorganic particles in a cross-section of the inorganic-containing layer is small, an inorganic particle layer can be formed even at high temperatures at which a resin flows and conduction between electrodes in microregions can be suppressed, thereby increasing short-circuit resistance. When the area ratio b of the inorganic particles is small, conduction can be suppressed by decreasing the TD heat shrinkage rate a to form a dense layer of inorganic particles. When the TD heat shrinkage rate a is large, conduction can be suppressed by increasing the area ratio b of the inorganic particles to form a thick film layer. The amount of TD heat shrinkage affects the amount of misalignment between the polyolefin resin and the inorganic particles, and thus becomes a factor which determines the non-uniformity in the presence ratio of inorganic particles on the separator surface. Since a large amount of inorganic particles is necessary to suppress short-circuits in a state of non-uniform presence while a small amount of inorganic particles is necessary to suppress short-circuits in a state of uniform presence, the ratio (a/b) of heat shrinkage with respect to area ratio of inorganic particles is a parameter which determines whether short-circuit prevention is acceptable.

### <Ratio of resin to inorganic material>

In the present disclosure, the content of the inorganic particles, when based on 100 parts by weight of the polyolefin resin, is preferably 100 parts by weight or more, more preferably 200 parts by weight or more, and even more preferably 300 parts by weight or more. When the content of the inorganic particles with respect to a crystalline resin of a polyolefin is 100 parts by weight or more, a layer having inorganic particles and lamellar crystals can be formed by melt-extrusion at a high drawdown ratio. Subsequently, a separator having low porosity and high permeability can be obtained by uniaxial stretching. Without limiting to theory, the reason therefor is presumably that when the amount of inorganic particles is large, both lamella porosification in the direction perpendicular to the stretching direction and filler porosification in the direction horizontal to the stretching direction occur, and since horizontal closed pores formed by filler porosification are connected to each other via vertical pores formed by the lamellar crystals, low porosity and high permeability are both achieved even at a small stretching ratio. On the other hand, when the content of inorganic particles is low, the distance between pores obtained by filler porosification is large. Consequently, it is presumably difficult for the pores formed by filler porosification to be connected to each other via the lamellar pores, and high permeability cannot be obtained.

The content ratio of inorganic particles in the inorganic-containing layer, when based on the total weight of the inorganic-containing layer, is preferably 50 wt% or greater, more preferably 60 wt% or greater, and even more preferably 70 wt% or greater. For the same reason as described above, it is preferable that the content of the inorganic particles be 50 wt% or greater based on the total weight of the inorganic-containing layer because a separator having low porosity and high permeability can be obtained.

### <<Method for manufacturing separator for electricity storage device>>

Generally, a method for manufacturing an inorganic-containing layer comprising a polyolefin and inorganic particles comprises a melt-extrusion step of mixing and dispersing a polyolefin resin composition and inorganic particles and melt-extruding the mixture to obtain a resin film, and a pore formation step of opening pores to porosify the obtained resin sheet, and further optionally comprises a stretching step and a heat treatment step. Methods for manufacturing an inorganic-containing layer are broadly classified into dry methods, which do not use a solvent in the pore formation step, and wet methods, which use a solvent. Since a wet method comprises a solvent, inorganic particles are easily dispersed even at a high content. On the other hand, since a dry method does not comprise a solvent, inorganic particles at a high content tend to be poorly dispersed, resulting in formation of large pores and failure to obtain sufficient strength.

Examples of the dry method include a method in which a polyolefin resin composition and inorganic particles are mixed and dispersed in a dry state and the mixture is melt-kneaded and extruded, followed by separation at the polyolefin crystal interface by heat treatment and stretching; and a method in which a polyolefin resin composition and an inorganic filler are melt-kneaded and molded on a sheet, followed by separation at the interface between the polyolefin and the inorganic filler by stretching.

Examples of the wet method include a method in which a polyolefin resin composition and inorganic particles are mixed and dispersed, a pore-forming material is added thereto, the mixture is melt-kneaded and molded into a sheet, the sheet is stretched as needed, and then the pore-forming material is extracted; and a method in which a polyolefin resin composition is dissolved and thereafter immersed in a poor solvent to the polyolefin to simultaneously solidify the polyolefin and remove the solvent.

A single-screw extruder or a twin-screw extruder can be used for melt-kneading the polyolefin resin composition. In addition to these, for example, a kneader, a Labo-Plastomill, a kneading roll, or a Banbury mixer can be used.

The polyolefin resin composition may optionally contain a non-polyolefin resin and an additive, depending on the method for manufacturing the inorganic-containing layer or the target physical properties of the inorganic-containing layer. Examples of the additive include pore-forming materials, fluorine-based flow modifiers, waxes, crystal-nucleating agents, antioxidants, metal soaps such as aliphatic carboxylic acid metal salts, ultraviolet absorbers, photo stabilizers, antistatic agents, antifogging agents, and color pigments. Examples of the pore-forming material include plasticizers, inorganic fillers, and combinations thereof.

Examples of the plasticizer include hydrocarbons such as liquid paraffin and paraffin wax; esters such as dioctyl phthalate and dibutyl phthalate; and higher alcohols such as oleyl alcohol and stearyl alcohol.

A stretching step may be carried out during the pore formation step or before or after the pore formation step. Either uniaxial stretching or biaxial stretching can be used as the stretching treatment. From the viewpoint of manufacturing cost when using a dry method, uniaxial stretching is preferable, but is not limited thereto. By using a lamella porosification method with uniaxial stretching, a separator for an electricity storage device having high permeability, high strength, and heat resistance as described below can be provided. Hereinafter, this will be described. The porosification method is generally a method in which a precursor (raw film) having oriented lamellar crystals is obtained by melt extrusion, cold-stretched, and then heat-stretched to open pores between the lamellar crystals. Preferably, by mixing a polyolefin resin with a high content of inorganic particles, melt-extruding the mixture at a high drawdown ratio, and cooling rapidly, a precursor (raw film) in which a high content of inorganic particles is densely arranged in a resin having highly oriented lamellar crystals can be obtained before the pore formation step. Therefore, stress concentration due to uniaxial stretching promotes pore formation, and having high permeability and adjusting the MD/TD strength ratio to 1.5 or greater are easy to achieve even with a small total stretching ratio. In the resulting separator, pore volume can be reduced to 20% or greater and 60% or less of a cross-section of the inorganic-containing layer while high permeability is ensured. As a result, the ratio of inorganic particles contained in the separator is high. Specifically, the area ratio of inorganic particles in a cross-section of the inorganic-containing layer is easily adjusted to 9% or greater. Further, high heat resistance can be obtained due to the high ratio of inorganic particles. Thus, the effect of the present invention can be more easily achieved by a lamella porosification method with uniaxial stretching under specific conditions. Although the reason therefor is not clear, the present inventors speculate as follows. Since inorganic particles have a higher heat capacity than a resin, cooling is slow and crystal orientation in the MD is difficult under general cooling conditions. Pore formation is inhibited in the subsequent uniaxial stretching, and high permeability cannot be easily obtained. Therefore, in the present disclosure, it is preferable that lamellar crystals be more strongly oriented in the MD by increasing the cooling rate of the raw film comprising inorganic particles, more specifically, by increasing the air knife airflow used for cooling, to rapidly decrease the resin temperature of the raw film comprising inorganic particles. Consequently, a raw film in which a high content of inorganic particles and a resin having lamellar crystals are densely arranged can be obtained, pore formation is promoted even at a small stretching ratio, and presumably, a separator for an electricity storage device in which high permeability and cell safety at high temperatures can be simultaneously achieved can be obtained.

To adjust heat shrinkage rate in the TD to 4% or less, TD stretching ratio is preferably set to 100% or less, more preferably 50% or less, even more preferably 30% or less, still more preferably 20% or less, and particularly preferably 10% or less.

To suppress shrinkage of the microporous film, a heat treatment step may be carried out after the stretching step or after the pore formation step for the purpose of heat setting. The heat treatment step may comprise a stretching operation carried out at a predetermined atmospheric temperature and a predetermined stretching rate for the purpose of adjusting physical properties, and/or a relaxation operation carried out at a predetermined atmospheric temperature and a predetermined relaxation rate for the purpose of reducing elongation stress. The relaxation operation may be carried out after the stretching operation. The heat treatment step can be carried out using a tenter or a roll stretcher.

Examples of the method for manufacturing the separator for an electricity storage device, having a multilayer structure in which a plurality of microporous membranes comprising an inorganic-containing layer are laminated, of the present disclosure include a coextrusion method and a lamination method. In the coextrusion method, the resin composition of each layer is simultaneously formed into a film by coextrusion, and the resulting multilayer raw film is stretched and porosified, whereby a multilayer microporous membrane can be produced. In the lamination method, each layer is formed separately by extrusion film formation to obtain a raw film. The resulting raw films are laminated to obtain a multilayer raw film. The resulting multilayer raw film is stretched and porosified, whereby a multilayer microporous membrane can be prepared. The coextrusion method is preferable in that the inorganic-containing layer can be supported by a layer not containing an inorganic filler, and thus the film formation stability is improved and the inorganic particle content can be increased.

### <<Electricity storage device>>

The electricity storage device of the present disclosure comprises a positive electrode, a negative electrode, and a separator for electricity storage device of the present disclosure described above. The separator for an electricity storage device is laminated between the positive electrode and the negative electrode.

Examples of the electricity storage device include, but are not limited to, lithium secondary cells, lithium-ion secondary cells, sodium secondary cells, sodium-ion secondary cells, magnesium secondary cells, magnesium-ion secondary cells, potassium secondary cells, potassium-ion secondary cells, aluminum secondary cells, aluminum-ion secondary cells, nickel-hydrogen cells, nickel-cadmium cells, electric double-layer capacitors, lithium-ion capacitors, redox flow cells, lithium-sulfur cells, lithium-air cells, and zinc-air cells. Of these, from the viewpoint of practicality, lithium secondary cells, lithium-ion secondary cells, nickel-hydrogen cells, and lithium-ion capacitors are preferable, and lithium-ion secondary cells are more preferable.

For example, a positive electrode and a negative electrode are laminated via the separator described above interposed therebetween and wound as needed to form a laminated electrode body or a wound electrode body, which is then wrapped in an outer packaging. The positive and negative electrodes are connected to positive and negative terminals of the outer packaging via leads. A nonaqueous electrolytic solution containing a nonaqueous solvent such as a chain or cyclic carbonate and an electrolyte such as a lithium salt is further injected into the outer packaging, which is then sealed, to produce an electricity storage device.

### EXAMPLES

Hereinafter, the present invention will be specifically described with reference to the Examples and Comparative Examples. However, the present invention is not limited thereto.

### <<Measurement and evaluation methods>>

### [Measurement of melt flow rate (MFR)]

The melt flow rate (MFR) of the polyolefin was measured (in units of g/10 min) under the conditions of a temperature of 230 °C and a load of 2.16 kg, in accordance with JIS K 7210. The MFR of polypropylene was measured at a temperature of 230 °C and a load of 2.16 kg, in accordance with JIS K 7210. The melt flow rate (MFR) of polyethylene was measured at a temperature of 190 °C and a load of 2.16 kg, in accordance with JIS K 7210. The MFR of the elastomer was measured at a temperature of 230 °C and a load of 2.16 kg, in accordance with JIS K 7210.

### [Area ratios of inorganic particles, pores, and resin]

### Treatment before electron microscope observation

A separator and ruthenium tetroxide (manufactured by Rare Metallic Co., Ltd.) were placed together in a sealed container and steam-dyeing was carried out for 4 h to prepare a ruthenium-dyed separator. 10.6 mL of an epoxy resin (Quetol812, manufactured by Nisshin-EM), 9.4 mL of a curing agent (Methyl nadic anhydride (MNA), manufactured by Nisshin-EM), and 0.34 mL of a reaction accelerator (2,4,6-Tris(dimethyl amino methyl)phenol, manufactured by Nisshin-EM, DMP-30) were mixed and sufficiently stirred. The ruthenium-dyed separator was then immersed in the mixture and placed in a reduced pressure environment to sufficiently impregnate the pores of the ruthenium-dyed separator with the mixture. Thereafter, the ruthenium-dyed separator was embedded in an epoxy resin by curing at 60 °C for 12 h or longer. After being embedded in the epoxy resin, the sample was roughly cross-sectioned with a razor, and then subjected to cross-section milling using an ion milling device (E3500 Plus, manufactured by Hitachi High-Tech Corporation) to prepare a cross-section sample. The cross-section was in the MD-ND plane. After the cross-section sample was fixed with a conductive adhesive (carbon-based) to the SEM sampling stage for cross-sectional observation and dried, osmium coating was carried out using an osmium coater (HPC-30W, manufactured by Vacuum Device) as a conductive treatment, under the conditions of an applied voltage adjustment knob setting of 4.5 and a discharge time of 0.5 s to prepare a microscopy sample.

### Acquisition of electron microscope image

Using SEM (S-4800, manufactured by Hitachi High-Tech Corporation) under the conditions of an acceleration voltage of 1.0 kV, an emission current of 10 µA, a probe current of High, a detector of Upper + LA-BSE100, a pixel resolution of about 10 nm/pix, and a working distance of 2.0 mm, the observation field of view was determined so that the entire region in the thickness direction of the layer containing the inorganic filler is within the observation field of view, and without saturating the brightness while setting the contrast as high as possible, an electron microscope image of the above microscopy sample was acquired. If the thickness of the layer containing the inorganic filler was larger than the observation field of view, the observation field of view was determined so that the layer containing the inorganic filler fits in the entire observation field of view. Without saturating the brightness while setting the contrast as high as possible, an electron microscope image was acquired.

### Image processing (calculation of pore ratio and inorganic filler ratio)

In the electron microscope image, a region that included 80% or greater of the thickness of the layer containing the inorganic filler, did not include regions other than the layer containing the inorganic filler, and is as wide as possible with a width of 20 µm or more in the horizontal direction was selected as the image processing area. When the thickness of the layer containing the inorganic filler was larger than the observation field of view, the entire observation field of view was used as the image processing area. The free software ImageJ was used for image processing. A brightness histogram of the above image processing region was displayed and, as shown in FIG. 1, the difference in brightness between two points, which are the maximum values of two closest peaks (indicated by arrows in FIG. 1) of three peaks, was calculated, and the numerical value thereof was designated as CD. A smoothed image was prepared using the Mean Shift Filter (an open source plug-in made by Kai Uwe Barthel of FHTW-Berlin). At this time, the Spatial radius, which is an argument of the Mean Shift Filter, was set to 3, and the Color distance was set to the above CD value. Two non-zero threshold values were determined using Multi Otsu Threshold (an open source plug-in made using the algorithm in PTL 1) for the smoothed image. Of the two thresholds, the smaller one was set as threshold A and the larger one was set as threshold B. In the smoothed image, pixels with a brightness of less than the threshold A were regarded as pores, pixels with a brightness of the threshold A or higher and lower than the threshold B were regarded as polyolefin, pixels with a brightness of the threshold B or higher were regarded as inorganic filler, and the number of pixels of pores with respect to the total number of pixels was used as the area ratio of the pores. The area ratio of the polyolefin and the area ratio of the inorganic filler were calculated in the same manner. Area ratios of the pores, area ratios of the polyolefin, and area ratios of the inorganic filler were calculated using electron microscope images in five or more field of views. From the average values of the respective ratios, the pore ratio, the polyolefin ratio, and the inorganic filler ratio were defined.

### [Average pore size of pores]

### Image processing (calculation of pore size)

The smoothed image was binarized by setting the brightness of the pixels having a brightness lower than the threshold A to 0 and the brightness of the pixels having a brightness equal to or higher than the threshold A to 255. Thickness analysis of BoneJ (an open source plug-in described in PTL 2) is executed, numerical values of "Tb. Th mean" in the "Results" window were read and converted to a length in real space, which was then used as the average pore size of the pores.

### [Overall thickness of separator (µm)]

The thickness (µm) of the separator was measured at room temperature of 23 ± 2 °C using a Digimatic Indicator IDC112 manufactured by Mitutoyo Corporation.

### [Thickness of each layer constituting separator (µm)]

An electron microscope image of a cross-section of the separator was obtained in the same manner as in the measurement in the above "Area ratios of inorganic particles, pores, and resin". In the resulting image, center lines were drawn so that the concave and convex areas of the inorganic-containing layer and an interface or another layer are the same, lengths between the lines were measured, and an average ratio of each layer was calculated. The thickness (µm) of each layer was calculated by multiplying the overall thickness (µm) of the separator measured in the above "Overall thickness of separator (µm)" by the above average ratio of each layer.

### [Air permeability resistance (s/100 ml)]

The air permeability resistance (s/100 ml) was measured using a Gurley air permeability meter, in accordance with JIS P-8117.

### [Evaluation of puncture strength]

A needle of a hemispherical tip having a radius of 0.5 mm was prepared, a separator was interposed between two plates having an aperture with a diameter (dia.) of 11 mm, and the needle, separator, and plates were set. Using an "MX2-50N" manufactured by Imada Co., Ltd., a puncture test was carried out under the conditions of a radius of curvature of 0.5 mm at the tip of the needle, a diameter of 11 mm for the aperture of the separator retention plates, and a puncture speed of 25 mm/min. The needle was brought into contact with the separator and the maximum puncture load (i.e., puncture strength (gf)) was measured.

### [MD/TD strength ratio]

The tensile strength of the separator was measured by using a tensile tester (TG-1kN type, manufactured by Minebea Co., Ltd.), setting the sample length to 35 mm before testing, and pulling the sample at a rate of 100 mm/min. The tensile strength was obtained by dividing the strength (tensile load value) when the sample yielded or the strength (tensile load value) when the sample was cut (ruptured), if the sample was cut before yielding, by the cross-section area of the test piece. The tensile strength was measured in each of the MD and TD of the separator. The MD tensile strength was then divided by the TD tensile strength to determine the MD/TD strength ratio.

### [F/S resistance at 210 °C and resistance increase rate at 210 °C]

### Production of positive electrode sheet

A slurry solution was prepared by mixing LiNi_{1/3}Mn_{1/3}Co_{1/3}O₂ as a positive electrode active material, carbon black as a conductive aid, and a polyvinylidene fluoride solution as a binder at a solid content weight ratio of 91:5:4, adding thereto N-methyl-2-pyrrolidone as a dispersion solvent so as to obtain a solid content of 68 wt%, and further mixing. The slurry solution was applied onto one side of a 15 µm-thick aluminum foil, and then the solvent was dried away to adjust the application amount on the positive electrode to 175 g/m², followed by rolling with a roll press so that the density of the positive electrode mixture portion was 2.4 g/cm³ to obtain a positive electrode sheet.

### Production of negative electrode sheet

A slurry solution was prepared by mixing artificial graphite as a negative electrode active material and styrene-butadiene rubber and carboxymethyl cellulose aqueous solution as binders at a solid content weight ratio of 96.4:1.9:1.7, adding thereto water as a dispersion solvent so as to obtain a solid content of 50 wt%, and further mixing. The slurry solution was applied onto one side of a 10 µm-thick copper foil, and then the solvent was dried away to adjust the application amount on the negative electrode to 86 g/m². The negative electrode was rolled with a roll press to obtain a negative electrode sheet comprising a negative electrode mixture portion having a density of 1.25 g/cm³.

### Preparation of nonaqueous electrolytic solution

LiBF₄ was dissolved as a solute at a concentration of 1.0 mol/L in a mixed solvent of propylene carbonate:ethylene carbonate:y-butylactone = 1:1:2 (volume ratio) and 0.5 wt% of trioctyl phosphate was further added thereto to prepare a nonaqueous electrolytic solution.

### Measurement of membrane resistance (Ω·cm²)

A sample 1 was prepared by cutting a 30 mm × 30 mm square sample from a separator. A positive electrode 2A, in which the positive electrode produced by the method described above was cut into a 55 mm × 20 mm rectangle, the electrode active material was removed so as to make the applied electrode active material portion into a 20 mm × 20 mm square, and the current-collecting foil was exposed, was prepared. A negative electrode 2A, in which the negative electrode produced by the method described above was cut into a 55 mm × 25 mm rectangle, the electrode active material was removed so as to make the applied electrode active material portion into a 25 mm × 25 mm square, and the current-collecting foil was exposed, was prepared. The sample 1 and the portions of the positive electrode 2A and the negative electrode 2B coated with electrode active material were immersed in a nonaqueous electrolyte for 1 min or longer. The negative electrode 2B, the sample 1, the positive electrode 2A, a Kapton film, and silicone rubber having a thickness of 4 mm were then laminated in that order. At this time, the sample 1 and the portion of the positive electrode 2A coated with electrode active material were laminated such that the portion of the negative electrode 2B coated with electrode active material overlapped therewith. This laminated body was placed on a ceramic plate in which a thermocouple was embedded, and the temperature of the heater was increased while a surface pressure of 2 MPa was applied with a hydraulic press. The temperature and the resistance were continuously measured using an electrical resistance measuring device "AG-4311" (Ando Electric Co., Ltd.) connected to the current collector portions of the positive electrode 2A and the negative electrode 2B. Additionally, the temperature was raised from a room temperature of 23 °C to 220 °C at a rate of 15 °C/min, and the resistance was measured with an alternating current at 1 V and 1 kHz. The obtained resistance value (Ω) at 210 °C was multiplied by the effective electrode area of 4 cm² to calculate membrane resistance (Ω·cm²) at 210 °C. The membrane resistance (Ω·cm²) at 210 °C of a separator not comprising any inorganic particles and having a pore area ratio in the range of 20% to 60% was measured in advance, and based on the value thereof, a resistance increase rate at 210 °C for each separator was evaluated.

### [MD heat shrinkage and TD heat shrinkage]

For the heat shrinkage rate, a 5 cm square was cut out from a separator, 9 points were marked at intervals of 2 cm, and the square was wrapped in paper. The marked sample was heat-treated at a predetermined temperature (130 °C or 150 °C) for 1 h and cooled to room temperature. Thereafter, the lengths in the MD and TD were each measured at 3 points to determine the shrinkage rate.

### [Laminated cell short-circuit test]

### Production of positive electrode

A slurry solution was prepared by mixing LiNi_{1/3}Mn_{1/3}Co_{1/3}O₂ as a positive electrode active material, carbon black as a conductive aid, and a polyvinylidene fluoride solution as a binder at a solid content weight ratio of 91:5:4, adding thereto N-methyl-2-pyrrolidone as a dispersion solvent so as to obtain a solid content of 68 wt%, and further mixing. The slurry solution was applied onto one side of a 15 µm-thick aluminum foil such that a portion of the aluminum foil was exposed, and then the solvent was dried away to adjust the application amount to 175 g/m². Rolling was further carried out with a roll press so that the density of the positive electrode mixture portion was 2.8 g/cm³. Thereafter, a 30 mm × 50 mm applied portion including the exposed portion of aluminum foil was cut and a lead piece made of aluminum was welded to the exposed portion of aluminum foil to obtain a positive electrode.

### Production of negative electrode

A slurry solution was prepared by mixing artificial graphite as a negative electrode active material and styrene-butadiene rubber and carboxymethyl cellulose aqueous solution as binders at a solid content weight ratio of 96.4:1.9:1.7, adding thereto water as a dispersion solvent so as to obtain a solid content of 50 wt%, and further mixing. The slurry solution was applied onto one side of a 10 µm-thick copper foil such that a portion of the copper foil was exposed, and then the solvent was dried away to adjust the application amount to 86 g/m². Rolling was further carried out with a roll press so that the density of the negative electrode mixture portion was 1.45 g/cm³. Thereafter, a 32 mm × 52 mm applied portion including the exposed portion of copper foil was cut and a lead piece made of nickel was welded to the exposed portion of copper foil to obtain a negative electrode.

### Preparation of nonaqueous electrolytic solution

LiPF₆ was dissolved as a solute at a concentration of 1.0 mol/L in a mixed solvent of ethylene carbonate:ethylmethyl carbonate = 1:2 (volume ratio) and 1.0 wt% of vinylene carbonate was further added thereto to prepare a nonaqueous electrolyte solution.

### Cell assembly

An aluminum lead piece with a sealant was welded to the exposed portion of aluminum foil of the positive electrode. A nickel lead piece with a sealant was welded to the exposed portion of copper foil of the negative electrode. Separators having a width of 55 mm and a length of 75 mm were then arranged so that the separators overlapped on the copper foil surface side of the negative electrode, and the overlapped portion of the separators was adhered and fixed with insulating tape. Thereafter, the positive electrode and the negative electrode were laminated so that the active material surfaces of the positive electrode and the negative electrode faced each other to form a laminated body. The laminated body was then inserted into an aluminum laminate outer packaging, and a total of three sides, the side where the positive and negative lead pieces are exposed and two other sides, were laminated and sealed. Next, the above nonaqueous electrolytic solution was injected into the outer packaging, after which the opening was sealed to produce a single-layer laminated cell. After allowing to stand at room temperature for 1 day, the obtained cell was subjected to initial charging for a total of 8 h by a method of charging to a cell voltage of 4.2 V at a constant current of 12 mA (0.3 C) in an atmosphere of 25 °C and, after reaching that voltage, maintaining and charging at a constant voltage of 4.2 V. Subsequently, the cell was discharged to a cell voltage of 3.0 V at a current value of 12 mA (0.3 C).

### Short-circuit test

The cell was interposed between heat-resistant plates so that a pressure applied to the cell was 0.1 MPa or less, the temperature of the cell charged to 4.2 V was raised in an oven, and cell voltage and temperature were continuously measured using a data logger connected to the positive and negative lead pieces. The oven was heated from room temperature to 150 °C at a rate of 5 °C/min and left at 150 °C for 30 min. Alternatively, the oven was heated from room temperature to 210 °C at a rate of 5 °C/min and left at 210 °C for 30 min. Short-circuits were evaluated based on the following criteria.
Pass: The cell voltage after the test was 3.5 V or higher.
Fail: The cell voltage after the test was less than 3.5 V.

### <<Example 1> >

### [Production of polypropylene resin and inorganic particle composition]

A polypropylene resin (PP, MFR = 0.91) and a surface-treated barium sulfate having an average particle size of 300 nm (1 part by weight of sodium stearate was used for the surface treatment of 100 parts by weight of barium sulfate) were dry-blended at a weight ratio of PP:BaSO₄ = 20:80 ( wt%), and then melt-kneaded using a twin-screw extruder HK-25D (manufactured by Parker Corporation, LID = 41). To minimize decomposition and denaturation of the resin, the portion from the resin charging hopper to the raw material tank was completely sealed, and nitrogen was continuously flowed from the bottom of the hopper to control oxygen concentration near the raw material inlet to 50 ppm or less. Further, all vents were completely sealed to eliminate air leaks into the cylinder. Due to the effect of lowering oxygen concentration, the decomposition and denaturation of the polymer were greatly minimized even at high temperatures. By charging the barium sulfate with a biaxial feeder, the barium sulfate can be further finely dispersed. After melt-kneading, a strand was drawn from a die (2 holes), cooled in a water cooling bath, and then cut with a pelletizer to obtain pellets.

### [Production of microporous membrane (three-layer)]

A laminated sheet was formed by a coextrusion method. A polypropylene resin (PP, MFR = 0.91) was melted with a 32 mmϕ twin co-rotating screw extruder and fed to a T-die using a gear pump. The above barium sulfate-containing pellets were melted with a 32 mmϕ single-screw extruder and fed to a T-die using a gear pump. The composition melt-kneaded by each extruder was extruded into a sheet form by a T-die capable of coextrusion of two types in three layers, and the molten polymer was cooled by blowing air and then wound up on a roll. The kneading temperature of the polypropylene resin was 210 °C, and the resin was extruded from the outer layers (two surface layers) of the T-die set at a temperature of 210 °C at an extrusion rate of 2.4 kg/hr. The barium sulfate-containing pellets were kneaded at a temperature of 190 °C, extruded at a rate of 1.2 kg/h in terms of the polypropylene resin, and extruded from the inner layer (intermediate layer) of the T-die set at a temperature of 210 °C. Immediately after extrusion, the extruded precursor (raw film) as cooled with an air knife at an airflow rate of 500 L/min per width of 500 mm. The thickness of the raw film after cooling was 15 µm. The raw film was the annealed at 130 °C for 15 min. The annealed raw film was then cold-stretched to 21% at room temperature, then heat-stretched to 156% at 120 °C, and relaxed to 130% at 125 °C to form a microporous membrane. After the above stretching and porosification, the physical properties of the resulting microporous membrane were measured. The results are shown in Table 1.

### <<Examples 2, 3, 5, 6, 9 to 12, 14, and 15 and Comparative Examples 1 to 5>>

Except that the raw materials, film-forming conditions, or separator physical properties were changed as shown in Tables 1 and 2, microporous membranes were obtained according to the same method as in Example 1, and the obtained microporous membranes were evaluated. The layer structure was adjusted by changing the extrusion ratio.

### <<Example 4> >

Surface-treated titanium oxide having an average particle size of 250 nm was used as the inorganic particles. A surface treatment of 1 part by weight of sodium stearate and 1 part by weight of an aluminum-based compound was carried out with respect to 100 parts by weight of the above titanium oxide. Except for the above, a microporous membrane was obtained according to the same method as in Example 1.

### < < Example 7 > >

Boehmite having an average particle size of 100 nm was used as the inorganic particles. The boehmite and an aluminum-based coupling agent (PRENACT AL-M) manufactured by Ajinomoto Fine-Techno Co., Inc. were dry-blended at a weight ratio of boehmite:PRENACT AL-M = 98:2 ( wt%). After further adjusting the weight ratio of polypropylene resin (PP, MFR = 0.91):boehmite = 20:80 and dry blending, the mixture was melt-kneaded using HK-25D (manufactured by Parker Corporation, LID = 41). To minimize decomposition and denaturation of the resin, the portion from the resin charging hopper inlet to the raw material tank was completely sealed, and nitrogen was continuously flowed from the bottom of the hopper to control oxygen concentration near the raw material inlet to 50 ppm or less. Further, all vents were completely sealed to eliminate air leaks into the cylinder. Due to the effect of lowering oxygen concentration, the decomposition and denaturation of the polymer were greatly minimized even at high temperatures. By charging the boehmite with a biaxial feeder, the boehmite can be further finely dispersed. After melt-kneading, a strand was drawn from a die (2 holes), cooled in a water cooling bath, and then cut with a pelletizer to obtain pellets. Except for the above, a microporous membrane was obtained according to the same method as in Example 1.

### < < Example 8 > >

Except that alumina having an average particle size of 500 nm, manufactured by Nippon Light Metal Co., Ltd., was used as the inorganic particles, a microporous membrane was obtained by the same method as in Example 8.

### <<Example 13>>

After MD stretching, the microporous membrane was kept at 120 °C and stretched 20% in the TD while adjustments were made to relax stress in the MD so that the microporous membrane would not tear. Except for the above, a microporous membrane was obtained according to the same method as in Example 1.

**Table 1**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Raw material | Polyolefin wt% | PP (MFR 0.91) 20 | PP (MFR 0.91) 20 | PP (MFR 0.91) 20 | PP (MFR 0.91) 20 | PE (MFR 0.31) 20 | PP (MFR 0.91) 20 | PP (MFR 0.91) 20 | PP (MFR 0.91) 20 | PP (MFR 0.91) 20 | PP (MFR 0.91) 20 |
| | Inorganic filler Particle size wt% | Barium sulfate 300 nm 80 | Barium sulfate 300 nm 80 | Barium sulfate 300 nm 80 | Titanium oxide 250 nm 80 | Barium sulfate 300 nm 80 | Barium sulfate 300 nm 80 | Boehmite 100 nm 80 | Alumina 500 nm 80 | Barium sulfate 200 nm 80 | Barium sulfate 300 nm 80 |
| Inorganic-containing layer structure | Area ratio of pores (%) | 45 | 35 | 43 | 44 | 44 | 43 | 43 | 45 | 44 | 50 |
| | Area ratio of inorganic filler (%) | 24 | 29 | 25 | 27 | 26 | 25 | 28 | 29 | 25 | 22 |
| | Average pore size (µm) | 0.24 | 0.20 | 0.23 | 0.23 | 0.65 | 0.22 | 0.2 | 0.45 | 0.20 | 0.28 |
| Separator structure and performance | Overall thickness of separator (µm) | 11.5 | 13.1 | 16.5 | 12.1 | 12.0 | 10.6 | 15.0 | 13.2 | 13.5 | 13.2 |
| | Thickness of inorganic-containing layer (µm) | 3.9 | 4.3 | 8.4 | 4.0 | 2.5 | 2.2 | 4.8 | 4.2 | 4.5 | 4.2 |
| | Thickness ratio of inorganic-containing layer (%) | 34 | 33 | 51 | 33 | 21 | 21 | 32 | 32 | 33 | 32 |
| | Air permeability (s/100 ml) | 567 | 446 | 420 | 420 | 251 | 211 | 442 | 349 | 340 | 308 |
| | Puncture strength (gf) | 201 | 168 | 199 | 199 | 178 | 159 | 181 | 178 | 170 | 169 |
| | MD tensile strength (kg/cm²) | 1408 | 985 | 958 | 1372 | 1180 | 1336 | 1301 | 1153 | 1321 | 1402 |
| | TD tensile strength (kg/cm²) | 89 | 101 | 81 | 113 | 118 | 100 | 121 | 117 | 102 | 102 |
| | MD/TD strength ratio | 15.9 | 9.8 | 11.9 | 12.1 | 10.0 | 13.4 | 10.8 | 9.9 | 13.0 | 13.7 |
| | F/S resistance at 210 °C (Ω/cm²) | 13.2 | 15.6 | 45.3 | 6.2 | 3.6 | 3.8 | 3.0 | 3.6 | 3.8 | 3.2 |
| | Resistance increase rate at 210 °C (%) | 943 | 1114 | 3236 | 443 | 257 | 268 | 214 | 257 | 271 | 229 |
| Separator structure and performance | MD heat shrinkage at 130 °C (%) | 10.0 | 12.5 | 12.5 | 15.0 | 15.0 | 15.0 | 10.0 | 12.5 | 12.5 | 12.5 |
| | TD heat shrinkage at 130 °C (%) | -0.8 | -1.5 | -0.4 | -1.3 | 0.0 | -1.5 | -0.5 | 0.5 | 4.0 | 1.2 |
| | MD heat shrinkage at 150 °C (%) | 22.0 | 26.4 | 21.4 | 28.0 | 28.2 | 28.2 | 20.2 | 22.4 | 22.0 | 21.2 |
| | TD heat shrinkage at 150 °C (%) | -0.8 | -1.8 | -0.8 | -2.1 | 1.2 | 1.2 | 1.6 | 1.3 | 2.1 | 1.6 |
| | Ratio of TD heat shrinkage/inorganic filler area (%) | -3.3 | -6.3 | -3.1 | -7.8 | 4.7 | 4.9 | 5.7 | 4.5 | 8.4 | 7.3 |
| | Laminated cell short-circuit test at 150 °C | Pass | Pass | Pass | Pass | Pass | Pass | Pass | Pass | Pass | Pass |
| | Laminated cell short-circuit test at 210 °C | Pass | Pass | Pass | Pass | Pass | Pass | Pass | Pass | Pass | Pass |
| Manufacturing condition | Layer constitution (extrusion ratio of PP/inorganic-containing layer/PP) | 1/1/1 | 1/1/1 | 1/2/1 | 1/1/1 | 1/0.5/1 | 1/0.5/1 | 1/1/1 | 1/1/1 | 1/1/1 | 1/1/1 |
| | MD heat-stretching ratio | 130% | 100% | 130% | 130% | 130% | 130% | 130% | 130% | 130% | 160% |
| | TD stretching ratio | 0% | 0% | 0% | 0% | 0% | 0% | 0% | 0% | 0% | 0% |
| | Air knife airflow (L/min. at width of 500 mm) | 500 | 500 | 500 | 500 | 500 | 500 | 500 | 500 | 400 | 500 |
| | Outer layer extruder temperature (°C) | 210 | 210 | 210 | 210 | 210 | 210 | 210 | 210 | 210 | 210 |
| | Inner layer extruder temperature (°C) | 190 | 190 | 190 | 190 | 190 | 190 | 190 | 190 | 200 | 190 |

**Table 2**

| | | Example 11 | Example 12 | Example 13 | Example 14 | Example 15 | Comparative Example 1 | Comparative Example 2 | Comparative Example 3 | Comparative Example 4 | Comparative Example 5 |
|---|---|---|---|---|---|---|---|---|---|---|---|
| Raw material | Polyolefin wt% | PP (MFR 0.91) 30 | PP (MFR 0.91) 20 | PP (MFR 0.91) 20 | PP (MFR 0.91) 30 | PP (MFR 0.91) 45 | PP (MFR 0.91) 100 | PP (MFR 0.91) 60 | PP (MFR 0.91) 20 | PP (MFR 0.91) 40 | PP (MFR 0.91) 40 |
| | Inorganic filler Particle size wt% | Barium sulfate 300 nm 70 | Barium sulfate 300 nm 80 | Barium sulfate 300 nm 80 | Barium sulfate 200 nm 70 | Barium sulfate 300 nm 55 | None | Barium sulfate 300 nm 40 | Barium sulfate 300 nm 80 | Barium sulfate 300 nm 60 | Barium sulfate 300 nm 60 |
| Inorganic-containing layer structure | Area ratio of pores (%) | 45 | 55 | 43 | 48 | 50 | 45 | 25 | 18 | 64 | 69 |
| | Area ratio of inorganic filler (%) | 17 | 20 | 25 | 16 | 10 | 0 | 8 | 37 | 7 | 8 |
| | Average pore size (µm) | 0.21 | 0.29 | 0.25 | 0.20 | 0.20 | 0.20 | 0.21 | 0.13 | 0.33 | 0.43 |
| | Overall thickness of separator (µm) | 13.3 | 11.2 | 13.2 | 13.1 | 12.8 | 14.2 | 15.2 | 14.2 | 10.5 | 8.2 |
| | Thickness of inorganic-containing layer (µm) | 4.5 | 3.7 | 4.2 | 4.3 | 4.1 | None | 4.9 | 4.5 | 3.5 | 2.3 |
| | Thickness ratio of inorganic-containing layer (%) | 34 | 33 | 32 | 33 | 32 | None | 32 | 32 | 33 | 28 |
| | Air permeability (s/100 ml) | 279 | 258 | 200 | 327 | 340 | 205 | 2540 | 11080 | 320 | 45 |
| Separator structure and | Puncture strength (gf) | 207 | 165 | 170 | 198 | 214 | 228 | 210 | 175 | 133 | 66 |
| performance | MD tensile strength (kg/cm²) | 1336 | 1520 | 1020 | 1320 | 1560 | 1387 | 1341 | 865 | 1340 | 423 |
| | TD tensile strength (kg/cm²) | 114 | 103 | 120 | 112 | 125 | 132 | 125 | 223 | 110 | 234 |
| | MD/TD strength ratio | 11.7 | 14.8 | 8.5 | 11.8 | 12.5 | 10.5 | 10.7 | 3.9 | 12.2 | 1.8 |
| | F/S resistance at 210 °C (Ω/cm²) | 3.0 | 2.6 | 8.0 | 2.6 | 1.9 | 1.4 | 1.5 | 14.2 | 1.5 | 1.5 |
| | Resistance increase rate at 210 °C (%) | 214 | 186 | 571 | 186 | 136 | 100 | 107 | 1014 | 107 | 107 |

**Table 2 (continued)**

| | | Example 11 | Example 12 | Example 13 | Example 14 | Example 15 | Comparative Example 1 | Comparative Example 2 | Comparative Example 3 | Comparative Example 4 | Comparative Example 5 |
|---|---|---|---|---|---|---|---|---|---|---|---|
| Separator structure and performance | MD heat shrinkage at 130 °C (%) | 12.8 | 15.8 | 12.0 | 13.2 | 12.2 | 15.0 | 15.0 | 12.5 | 24.2 | 7.5 |
| | TD heat shrinkage at 130 °C (%) | 0.5 | 1.2 | 2.0 | 0.0 | 0.6 | 0.2 | 0.5 | 0.4 | 0.4 | 4.2 |
| | MD heat shrinkage at 150 °C (%) | 22.4 | 30.2 | 22.4 | 25.0 | 21.2 | 28.2 | 29.0 | 24.8 | 35.2 | 17.4 |
| | TD heat shrinkage at 150 °C (%) | 1.3 | 2.8 | 3.2 | 2.1 | 1.3 | 0.5 | 1.3 | 0.8 | 1.2 | 5.0 |
| | Ratio of TD heat shrinkage/inorganic filler area (%) | 7.9 | 14.0 | 12.8 | 13.1 | 13.0 | N/A | 16.3 | 2.2 | 17.1 | 62.5 |
| | Laminated cell short-circuit test at 150 °C | Pass | Pass | Pass | Pass | Pass | Pass | Pass | Pass | Pass | Fail |
| | Laminated cell short-circuit test at 210 °C | Pass | Fail | Fail | Fail | Fail | Fail | Fail | Fail | Fail | Fail |
| Manufacturing condition | Layer constitution (Extrusion ratio of PP/inorganic-containing layer/PP) | 1/1/1 | 1/1/1 | 1/1/1 | 1/1/1 | 1/1/1 | 1/1/1 | 1/1/1 | 1/1/1 | 1/1/1 | 1/1/1 |
| | MD heat-stretching ratio | 130% | 200% | 80% | 130% | 130% | 130% | 100% | 30% | 230% | 130% |
| | TD stretching ratio | 0% | 0% | 20% | 0% | 0% | 0% | 0% | 0% | 0% | 200% |
| | Air knife airflow (L/min. at width of 500 mm) | 500 | 500 | 500 | 500 | 500 | 300 | 500 | 500 | 500 | 500 |
| | Outer layer extruder temperature (°C) | 210 | 210 | 210 | 210 | 210 | 210 | 210 | 210 | 210 | 210 |
| | Inner layer extruder temperature (°C) | 190 | 190 | 190 | 190 | 190 | 210 | 190 | 190 | 190 | 190 |

### INDUSTRIAL APPLICABILITY

The separator for an electricity storage device of the present disclosure can simultaneously achieve high strength and heat resistance while having high permeability, and can be suitably used as a separator of an electricity storage device, for example, a lithium-ion secondary cell.

## Claims

1. A separator for an electricity storage device including an inorganic-containing layer comprising inorganic particles and a polyolefin resin,
**characterized in that**
in a cross-section of the inorganic-containing layer,
a ratio b of an area occupied by the inorganic particles, determined as described in the description, is 9% or greater and 35% or less,
a ratio of an area occupied by pores, determined as described in the description, is 20% or greater and 60% or less,
wherein the separator for an electricity storage device has a TD heat shrinkage rate a at 150 °C, measured as described in the description, of 4% or less, and
a ratio of tensile strength in MD to tensile strength in TD, measured as described in the description, is 6.0 or greater.

2. The separator for an electricity storage device according to claim 1, wherein the ratio b of an area occupied by the inorganic particles is 12% or greater and 35% or less.

3. The separator for an electricity storage device according to claim 1 or 2, wherein a ratio (a/b) of the TD heat shrinkage rate a with respect to the ratio b of an area occupied by the inorganic particles is -10% or greater and 10% or less.

4. The separator for an electricity storage device according to any one of claims 1 to 3, wherein the inorganic-containing layer comprises 100 parts by weight or more of the inorganic particles with respect to 100 parts by weight of a polyolefin resin.

5. The separator for an electricity storage device according to any one of claims 1 to 4, wherein the polyolefin resin has an MFR, measured at a load of 2.16 kg and a temperature of 230 °C, of 0.2 or greater and 15 or less.

6. The separator for an electricity storage device according to any one of claims 1 to 5, wherein the inorganic particles have a particle size of 60 nm or more and 2000 nm or less.

7. The separator for an electricity storage device according to any one of claims 1 to 6, wherein the inorganic-containing layer has a thickness of 1 µm or more and 30 µm or less.

8. The separator for an electricity storage device according to any one of claims 1 to 7, wherein the inorganic-containing layer has an average pore size of 10 nm or more and 2000 nm or less.

9. The separator for an electricity storage device according to any one of claims 1 to 8, further including a microporous outer layer having a polypropylene resin as a main component on one or both sides of the inorganic-containing layer.

10. The separator for an electricity storage device according to any one of claims 1 to 9, wherein the inorganic-containing layer has a thickness that is 15% or greater and 90% or less of an overall thickness of the separator for an electricity storage device.

11. The separator for an electricity storage device according to any one of claims 1 to 10, wherein the overall thickness of the separator for an electricity storage device is 5 µm or more and 30 µm or less.

12. The separator for an electricity storage device according to any one of claims 1 to 11, wherein a puncture strength per 14 µm thickness of the separator for an electricity storage device, determined as described in the description, is 100 gf or more.

## Patentansprüche

1. Separator für eine Stromspeichervorrichtung, der eine anorganische Substanz-enthaltende Schicht aufweist, welche anorganische Teilchen und ein Polyolefinharz enthält,
**dadurch gekennzeichnet, dass**
in einem Querschnitt der anorganische Substanz-enthaltenden Schicht,
der Anteil b der von den anorganischen Teilchen belegten Fläche, bestimmt wie in der Beschreibung beschrieben, 9 % oder mehr und 35 % oder weniger beträgt,
der Anteil der von Poren belegten Fläche, bestimmt wie in der Beschreibung beschrieben, 20 % oder mehr und 60 % oder weniger beträgt,
wobei der Separator für eine Stromspeichereinrichtung einen TD-Wärmeschrumpfungsgrad a bei 150°C, gemessen wie in der Beschreibung beschrieben, von 4 % oder weniger aufweist, und
das Verhältnis der Zugfestigkeit in MD zur Zugfestigkeit in TD, gemessen wie in der Beschreibung beschrieben, 6,0 oder mehr beträgt.

2. Separator für eine Stromspeichervorrichtung nach Anspruch 1, wobei der Anteil b der von den anorganischen Teilchen eingenommenen Fläche 12 % oder mehr und 35 % oder weniger beträgt.

3. Separator für eine Stromspeichervorrichtung nach Anspruch 1 oder 2, wobei das Verhältnis (a/b) des TD-Wärmeschrumpfungsgrads a zu dem Anteil b der von den anorganischen Teilchen belegten Fläche -10 % oder mehr und 10 % oder weniger beträgt.

4. Separator für eine Stromspeichervorrichtung nach einem der Ansprüche 1 bis 3, wobei die anorganische Substanz-enthaltende Schicht 100 Gewichtsteile oder mehr der anorganischen Teilchen, bezogen auf 100 Gewichtsteile des Polyolefinharzes, umfasst.

5. Separator für eine Stromspeichervorrichtung nach einem der Ansprüche 1 bis 4, wobei das Polyolefinharz eine MFR, gemessen bei einer Last von 2,16 kg und einer Temperatur von 230°C, von 0,2 oder mehr und 15 oder weniger aufweist.

6. Separator für eine Stromspeichervorrichtung nach einem der Ansprüche 1 bis 5, wobei die anorganischen Teilchen eine Teilchengröße von 60 nm oder mehr und 2000 nm oder weniger aufweisen.

7. Separator für eine Stromspeichervorrichtung nach einem der Ansprüche 1 bis 6, wobei die anorganische Substanz-enthaltende Schicht eine Dicke von 1 µm oder mehr und 30 µm oder weniger aufweist.

8. Separator für eine Stromspeichervorrichtung nach einem der Ansprüche 1 bis 7, wobei die anorganische Substanz-enthaltende Schicht eine mittlere Porengröße von 10 nm oder mehr und 2000 nm oder weniger aufweist.

9. Separator für eine Stromspeichervorrichtung nach einem der Ansprüche 1 bis 8, der außerdem eine mikroporöse Außenschicht mit einem Polypropylenharz als Hauptbestandteil auf einer oder beiden Seiten der anorganische Substanz-enthaltenden Schicht aufweist.

10. Separator für eine Stromspeichervorrichtung nach einem der Ansprüche 1 bis 9, wobei die anorganische Substanz-enthaltende Schicht eine Dicke aufweist, die 15% oder mehr und 90% oder weniger der Gesamtdicke des Separators für eine Stromspeichervorrichtung beträgt.

11. Separator für eine Stromspeichervorrichtung nach einem der Ansprüche 1 bis 10, wobei die Gesamtdicke des Separators für eine Stromspeichervorrichtung 5 µm oder mehr und 30 µm oder weniger beträgt.

12. Separator für eine Stromspeichervorrichtung nach einem der Ansprüche 1 bis 11, wobei die Durchstoßfestigkeit pro 14µm Dicke des Separators für eine Stromspeichervorrichtung, bestimmt wie in der Beschreibung beschrieben, 100 gf oder mehr beträgt.

## Revendications

1. Séparateur pour un dispositif de stockage d'électricité incluant une couche contenant des substances inorganiques comprenant des particules inorganiques et une résine de polyoléfine,
**caractérisé en ce que**
dans une coupe transversale de la couche contenant des substances inorganiques,
un rapport b d'une zone occupée par les particules inorganiques, déterminé tel que décrit dans la description, est de 9 % ou plus et de 35 % ou moins,
un rapport d'une zone occupée par des pores, déterminé tel que décrit dans la description, est de 20 % ou plus et de 60 % ou moins,
dans lequel le séparateur pour un dispositif de stockage d'électricité présente un taux de retrait thermique DT a à 150 °C, mesuré tel que décrit dans la description, de 4 % ou moins, et
un rapport de la résistance à la traction dans la DM à la résistance à la traction dans la DT, mesuré tel que décrit dans la description, est de 6,0 ou plus.

2. Séparateur pour un dispositif de stockage d'électricité selon la revendication 1, dans lequel le rapport b d'une zone occupée par les particules inorganiques est de 12 % ou plus et de 35 % ou moins.

3. Séparateur pour un dispositif de stockage d'électricité selon la revendication 1 ou 2, dans lequel un rapport (a/b) du taux de retrait thermique DT a par rapport au rapport b d'une zone occupée par les particules inorganiques est de -10 % ou plus et de 10 % ou moins.

4. Séparateur pour un dispositif de stockage d'électricité selon l'une quelconque des revendications 1 à 3, dans lequel la couche contenant des substances inorganiques comprend 100 parties en poids ou plus des particules inorganiques par rapport à 100 parties en poids d'une résine de polyoléfine.

5. Séparateur pour un dispositif de stockage d'électricité selon l'une quelconque des revendications 1 à 4, dans lequel la résine de polyoléfine présente un MFR, mesuré à une charge de 2,16 kg et une température de 230 °C, de 0,2 ou plus et de 15 ou moins.

6. Séparateur pour un dispositif de stockage d'électricité selon l'une quelconque des revendications 1 à 5, dans lequel les particules inorganiques présentent une taille de particule de 60 nm ou plus et de 2 000 nm ou moins.

7. Séparateur pour un dispositif de stockage d'électricité selon l'une quelconque des revendications 1 à 6, dans lequel la couche contenant des substances inorganiques présente une épaisseur de 1 µm ou plus et de 30 µm ou moins.

8. Séparateur pour un dispositif de stockage d'électricité selon l'une quelconque des revendications 1 à 7, dans lequel la couche contenant des substances inorganiques présente une taille moyenne de pore de 10 nm ou plus et de 2 000 nm ou moins.

9. Séparateur pour un dispositif de stockage d'électricité selon l'une quelconque des revendications 1 à 8, incluant en outre une couche externe microporeuse présentant une résine de polypropylène en tant que composant principal sur un ou les deux côtés de la couche contenant des substances inorganiques.

10. Séparateur pour un dispositif de stockage d'électricité selon l'une quelconque des revendications 1 à 9, dans lequel la couche contenant des substances inorganiques présente une épaisseur qui est 15 % ou plus et 90 % ou moins d'une épaisseur globale du séparateur pour un dispositif de stockage d'électricité.

11. Séparateur pour un dispositif de stockage d'électricité selon l'une quelconque des revendications 1 à 10, dans lequel l'épaisseur globale du séparateur pour un dispositif de stockage d'électricité est de 5 µm ou plus et de 30 µm ou moins.

12. Séparateur pour un dispositif de stockage d'électricité selon l'une quelconque des revendications 1 à 11, dans lequel une résistance à la perforation pour une épaisseur de 14 µm du séparateur pour un dispositif de stockage d'électricité, déterminée tel que décrit dans la description, est de 100 gf ou plus.
